# EUROPÄISCHE PATENTANMELDUNG

(11) **EP 2 608 376 A1**
(43) Veröffentlichungstag der Anmeldung: **26.06.2013**
(21) Anmeldenummer: 11194179.5
(22) Anmeldetag: 19.12.2011
(51) Int. Cl.: H02M 1/36

(54) **Verfahren zum Entladen eines Zwischenkreiskondensators eines Submoduls einer Stromrichterschaltung**

(71) Anmelder: Siemens Aktiengesellschaft, 80333 München (DE)
(72) Erfinder: Völkel, Stefan, 91058 Erlangen (DE)

(57) **Zusammenfassung**

Die Erfindung betrifft ein Verfahren zum Entladen eines Zwischenkreiskondensators (44), der in einem Submodul (22) eines modularen Umrichters (4) an einen Wechselrichter (42) angeschlossen ist. Das Verfahren umfasst Übertragen einer am Zwischenkreiskondensator (44) anliegenden Gleichspannung (72) an einen Ausgang (30,32) des Wechselrichters (42), und Abgeben der übertragenen Spannung (58) an eine an den Wechselrichter (42) angeschlossene elektrische Last (10), bis die Gleichspannung (72) am Zwischenkreiskondensator (44) auf eine vorbestimmte Schwellspannung reduziert ist.

## Beschreibung

Die Erfindung betrifft ein Verfahren gemäß dem Oberbegriff des Anspruchs 1, eine Steuervorrichtung zur Durchführung des Verfahrens und eine Stromrichterschaltung mit der Steuervorrichtung.

Eine Stromrichterschaltung zur elektrischen Energieversorgung der Motorwicklungen eines Elektromotors in einem Fahrzeugantrieb ist beispielsweise aus der Veröffentlichung Lukas Lamberts et al, "Modularer Hochfrequenz Umrichter für Fahrzeugantriebe", EMA 2010, 08. bis 09. September 2010, Aschaffenburg bekannt.

Dabei handelt es sich um eine Schaltung, die zum Umwandeln einer Gleichspannung aus einer elektrischen Leistungsquelle in mehrere Wechselspannungen vorgesehen ist. Die einzelnen Wechselspannungen werden durch in Reihe geschaltete Submodule erzeugt, an denen eingangsseitig jeweils ein Teil der Gleichspannung abfällt. Submodulintern wird der entsprechende Teil der Gleichspannung jeweils über eine als Wechselrichter arbeitende einphasige Vollbrücke in eine Wechselspannung umgewandelt, die an eine der Motorwicklungen abgegebenen werden kann. Die einphasige Vollbrücke umfasst zwei einphasige Halbbrücken, die jeweils zur Erzeugung einer Wechselspannungsphase vorgesehen sind, sodass die beiden Wechselspannungsphasen in der Summe eine einphasige Wechselspannung ergeben.

Die an den Eingängen der einzelnen Submodule abfallenden Teilspannungen werden vor der Wechselrichtung durch die Vollbrücke durch einen Hochsetzsteller erhöht. Der Hochsetzsteller umfasst eine Induktivität, die in Reihe zwischen der elektrischen Leistungsquelle und der Reihenschaltung der Vollbrücken verschaltet ist, sowie eine Eingangshalbbrücke in jedem Submodul. Die Vollbrücke und die Halbbrücke sind submodulintern gleichspannungsseitig verschaltet.

Parallel zur Vollbrücke und zur Eingangshalbbrücke in jedem Submodul ist ein Zwischenkreiskondensator verschaltet, der elektrische Energie, beispielsweise aus einem Blindleistungsfluss von den Motorwicklungen, zwischenspeichern kann.

Es ist Aufgabe der Erfindung, die bekannte Stromrichterschaltung zu verbessern.

Die Aufgabe wird durch die Merkmale der unabhängigen Ansprüche gelöst. Bevorzugte Weiterbildungen sind Gegenstand der abhängigen Ansprüche.

Die Erfindung schlägt vor, in einem Submodul einer Stromrichterschaltung der eingangs genannten Art einen an eine Vollbrücke angeschlossenen Zwischenkreiskondensator über eine an die Vollbrücke angeschlossene Last zu entladen.

Die Erfindung geht von der Überlegung aus, dass der Zwischenkreiskondensator eines Submoduls in einer Stromrichterschaltung der eingangs genannten Art über eine gesonderte Schaltung entladen werden könnte, die die im Zwischenkreiskondensator gespeicherte Energie beispielsweise in Wärme umsetzt. Der Erfindung liegt jedoch die Erkenntnis zugrunde, dass eine elektrische Last selbst im Falle einer Motorwicklung eines Motors stets einen ohmschen Widerstand umfasst. Dieser ohmsche Verbraucherwiderstand könnte zum Umwandeln der im Zwischenkreiskondensator gespeicherten Energie in Wärme genutzt werden, so dass eine gesonderte Schaltung zum Entladen des Zwischenkreiskondensators redundant wäre.

Zur Vermeidung der Redundanz, schlägt die Erfindung daher die bereits erwähnte Entladung des Zwischenkreiskondensators über die an das Submodul angeschlossene elektrische Last vor.

Die Erfindung gibt daher ein Verfahren zum Entladen eines Zwischenkreiskondensators eines bestimmten Submoduls einer Stromrichterschaltung an, umfassend wenigstens zwei Submodule in Reihenschaltung, die über eine Induktivität elektrische Leistung aus einer eine Gleichspannung abgebenden Leistungsquelle bezieht, wobei jedes Submodul eingangsseitig eine einphasige Halbbrücke und lastseitig eine einphasige Vollbrücke aufweist, und wobei die Halbbrücke und die Vollbrücke gleichspannungsseitig sowie parallel hierzu ein Zwischenkreiskondensator geschaltet sind. Das angegebene Verfahren umfasst die Schritte Übertragen einer im Zwischenkreiskondensator des bestimmten Submoduls gespeicherten elektrischen Energie an einen Ausgang der Vollbrücke des bestimmten Submoduls und Abgeben der übertragenen elektrischen Energie an eine an die Vollbrücke des bestimmten Submoduls angeschlossene elektrische Last, bis eine Spannung am Zwischenkreiskondensator des bestimmten Submoduls auf eine vorbestimmte Schwellspannung reduziert ist.

Die vorbestimmte Schwellspannung kann jeden beliebigen Wert annehmen, der ausreicht, um den Zwischenkreiskondensator des bestimmten Submoduls in einen sicherheitsunkritischen Zustand zu überführen. Dies ist applikationsabhängig. So könnte die vorbestimmte Schwellspannung beispielsweise Null betragen. Sie kann aber auch auf einen Wert über Null festgelegt werden, wenn beispielsweise eine Restspannung im Zwischenkreiskondensator des bestimmten Submoduls sicherheitstechnisch unbedenklich ist.

Die Vollbrücke ist aus zwei Einzelhalbbrücken aufgebaut, wobei die Eingangshalbbrücke und die Einzelhabbrücken der Vollbrücke jeweils eine Reihenschaltung aus zwei Brückenarmen aufweisen. Diese drei Reihenschaltungen sind im Submodul zueinander parallel verschaltet. Dabei wird an einem der beiden Brückenarme der Eingangshalbbrücke die umzuwandelnde Teilspannung der Gleichspannung angelegt und zwischen einem Brückenzweig der beiden Einzelhalbbrücken der Vollbrücke die auszugebende Wechselspannung abgegriffen.

Die Vollbrücke kann auch dreiphasig oder mehrphasig sein. Entsprechend ihrer Anzahl an Phasen weist die Vollbrücke eine Anzahl an Einzelhalbbrücken auf, die parallelgeschaltet sind.

Durch die Vermeidung von Redundanz in den einzelnen Submodulen einer Stromrichterschaltung können Kosten und Bauraum zur technischen Umsetzung der Submodule in der Stromrichterschaltung und damit in der gesamten Stromrichterschaltung eingespart werden.

In einer Weiterbildung der Erfindung umfasst das angegebene Verfahren die Schritte Erfassen einer Fehlfunktion in der Stromrichterschaltung und Abschalten der die Gleichspannung abgebenden Leistungsquelle, nachdem die Fehlfunktion in der Stromrichterschaltung erfasst ist. In besonders günstiger Weise erfolgt die Abschaltung der Leistungsquelle vor der Entladung des Zwischenkreiskondensators. Auf diese Weise kann der gesamte modulare Umrichter in einen sicheren Zustand überführt werden. Ist die elektrische Last beispielsweise als Motorwicklung Teil eines Elektromotors eines Fahrzeuges, so kann beispielsweise im Falle eines Unfalls mit dem Fahrzeug vermieden werden, dass sich ein Unfallopfer oder andere Personen am aufgeladenen Zwischenkreiskondensator verletzen.

In einer anderen Weiterbildung der Erfindung wird eine Fehlfunktion in der Stromrichterschaltung erfasst, wenn ein Gehäuse des Submoduls und/oder ein Gehäuse der Stromrichterschaltung geöffnet ist. Auf diese Weise können Schäden vermieden werden, die im Falle eines beabsichtigten oder unbeabsichtigten Öffnens des Gehäuses und eines unbeabsichtigten Berührens des Submodulschaltkreises durch Personen oder andere technische Elemente entstehen können.

In einer noch weiteren Weiterbildung der Erfindung umfasst das angegebene Verfahren die Schritte Erfassen einer Fehlfunktion im bestimmten Submodul und Abschalten der Eingangsspannung des bestimmten Submoduls, nachdem die Fehlfunktion im bestimmten Submodul erfasst ist. In besonders günstiger Weise erfolgt die Abschaltung der Eingangsspannung des bestimmten Submoduls vor der Entladung des Zwischenkreiskondensators des bestimmten Submoduls. Die Abschaltung des bestimmten Submoduls selbst kann dabei erneut durch eine Abschaltung der die gesamte Stromrichterschaltung versorgenden Leistungsquelle erfolgen, so dass auch automatisch die Eingangsspannung am bestimmten Submodul abgeschaltet ist. Eine alternative Ausführung der Abschaltung der Eingangsspannung des bestimmten Submoduls ist Gegenstand der Unteransprüche.

In einer bevorzugten Weiterbildung der Erfindung umfasst das angegebene Verfahren den Schritt Erfassen der Fehlfunktion im Submodul, wenn die Spannung am Zwischenkreiskondensator des bestimmten Submoduls von einem vorgegeben Spannungsbereich abweicht. Durch die am Zwischenkreiskondensator abfallende Spannung lässt sich auf direkte Weise erkennen, ob der Leistungsfluss zwischen Eingang und Ausgang des bestimmten Submoduls beispielsweise durch einen Fehler gestört ist. Ist die Spannung am Zwischenkreiskondensator des bestimmten Submoduls zu hoch, könnte dies an einer Unterbrechung im bestimmten Submodul oder in einer an das bestimmte Submodul angeschlossenen elektrischen Last, wie der Motorwicklung, liegen, so dass zu wenig in das bestimmte Submodul eingespeiste Leistung an die elektrische Last abgegeben wird. Daher muss ein großer Teil der entsprechenden Energie im Zwischenkreiskondensator des bestimmten Submoduls gespeichert werden, was zu der entsprechend hohen Spannung führt. Eine zu niedrige Spannung am Zwischenkreiskondensator des bestimmten Submoduls könnte ein Hinweis auf einen Kurzschluss sein. Durch den vorgegeben Spannungsbereich für die Spannung am Zwischenkreiskondensator des bestimmten Submoduls ist damit ein Kriterium zum unmittelbaren Überwachen des bestimmten Submoduls auf Fehler hin geschaffen, auf die durch das Entladen des Zwischenkreiskondensators des bestimmten Submoduls rasch reagiert werden kann.

In einer besonders bevorzugten Weiterbildung der Erfindung umfasst das angegebene Verfahren den Schritt Kurzschließen eines Eingangs des bestimmten Submoduls der Stromrichterschaltung zum Abschalten der Eingangsspannung des bestimmten Submoduls. Das heißt, dass das bestimmte Submodul aus einem Leistungskreis der Stromrichterschaltung herausgenommen wird, ohne dass andere Submodule von dieser Unterbrechung der Leistungszufuhr zum bestimmten Submodul beeinträchtigt werden. Auf diese Weise lässt sich das bestimmte Submodul lokal schützen, ein elektrischer Verbraucher, der an die einzelnen Submodule angeschlossene elektrische Lasten umfasst, kann jedoch in einer Art Notprogramm weiterhin betrieben werden. So kann beispielsweise ein Elektromotor, der als elektrische Lasten vier Windungen umfasst, die jeweils von einem individuellen Submodul mit elektrischer Energie versorgt werden, selbst dann weiterbetrieben werden, wenn eines der Submodule ausfällt. Ist der Elektromotor beispielsweise zum Antrieb eines Fahrzeuges vorgesehen, so lässt sich dieses Fahrzeug beispielsweise in einem Notprogramm selbsttätig zur nächsten Werkstatt fahren, ohne dass externe Hilfe, wie ein Abschleppwagen notwendig wäre.

In einer anderen Weiterbildung der Erfindung umfasst das angegebene Verfahren den Schritt Modulieren eines durch die elektrische Last, die an das bestimmte Submodul angeschlossen ist, fliesenden Ausgangsstromes mit der Vollbrücke zum Übertragen der am Zwischenkreiskondensator des bestimmten Submoduls anliegenden Gleichspannung an den Ausgang der Vollbrücke. Durch die Modulation lässt sich im bestimmten Submodul während der Entladung des Zwischenkreiskondensators der angeschlossenen elektrischen Last ein Verhalten aufprägen, dass es beispielsweise erlaubt, einen die elektrische Last umfassenden Verbraucher abschließend in einen definierten Zustand zu überführen.

In einer besonderen Weiterbildung der Erfindung wird im bestimmten Submodul die angeschlossene elektrische Last zur Modulation mit dem Zwischenkreiskondensator über die Vollbrücke kurzgeschlossen. Auf diese Weise lässt sich der Zwischenkreiskondensator sehr schnell entladen.

In einer bevorzugten Weiterbildung der Erfindung ist die Modulation eine Pulsweitenmodulation oder eine Pulsfrequenzmodulation. Durch die Pulsweitenmodulation oder die Pulsfrequenzmodulation lässt sich in die elektrische Last ein vorgegebener Strom einprägen, so dass hohe Stromspitzen, die unter Umständen zu Schäden an der elektrischen Last führen könnten, vermieden werden können. Diese hohen Stromspitzen können entstehen, wenn die elektrische Last sehr niederohmig ist. Zudem kann auch ein Schwingen des Entladestromes gedämpft oder ganz vermieden werden, wenn die elektrische Last induktiv ist und zusammen mit dem Zwischenkreiskondensator des bestimmten Submoduls einen Schwingkreis bildet.

In einer besonders bevorzugten Weiterbildung umfasst das angegebene Verfahren den Schritt Bestimmen eines Referenzsignals und/oder eines Pulssignals für die Pulsweitenmodulation aus einem Regelkreis zum Regeln eines Stromes durch die elektrische Last. Alternativ dazu können das Referenzsignal und/- oder das Pulssignal fest vorgegeben sein.

In einer besonders bevorzugten Weiterbildung umfasst das angegebene Verfahren den Schritt Modulieren des durch die elektrische Last fliesenden Ausgangsstromes derart, dass sich durch einen Laststrom hervorgerufene Wirkungen der einzelnen an die Submodule angeschlossenen elektrischen Lasten gegenseitig aufheben, so dass gesichert ist, dass das Entladen des Zwischenkreiskondensators des bestimmten Submoduls nach außen hin neutral erscheint.

Dabei können die elektrischen Lasten jeweils Wicklungen eines Elektromotors sein, die als durch den Laststrom hervorgerufene Wirkung ein Drehmoment auf einen Rotor des Elektromotors ausüben. Mit anderen Worten wird der durch die elektrische Last fliesende Ausgangsstrom derart moduliert, dass der Elektromotor nach außen hin drehmomentenfrei bleibt.

In einer alternativen Weiterbildung der Erfindung umfasst das angegebene Verfahren den Schritt Regeln eines durch die elektrische Last fliesenden Ausgangsstromes mit dem Wechselrichter auf einen Sollwert zum Übertragen der am Zwischenkreiskondensator anliegenden Gleichspannung an den Ausgang des Wechselrichters. Auf diese Weise lässt sich auf einfache Weise der Strom durch die elektrische Last sicher begrenzen. In einer bevorzugten Weiterbildung der Erfindung umfasst die Regelung eine Zweipunktregelung mit eingebauter Hysterese, die ein Schwingen des durch die elektrische Last fliesenden Ausgangsstromes vermeidet.

Die Erfindung gibt auch eine Steuervorrichtung zur Durchführung eines angegebenen Verfahrens an.

In einer Weiterbildung der Erfindung weist die Steuervorrichtung einen Speicher und einen Prozessor auf. Dabei ist das Verfahren in Form eines Computerprogramms in dem Speicher hinterlegt und der Prozessor zur Ausführung des angegebenen Verfahrens vorgesehen, wenn das Computerprogramm aus dem Speicher in den Prozessor geladen ist.

Die Erfindung gibt auch eine Stromrichterschaltung an, die wenigstens zwei Submodule in Reihenschaltung umfasst, die über eine Induktivität elektrische Leistung aus einer eine Gleichspannung abgebenden Leistungsquelle bezieht. Dabei weist jedes Submodul eingangsseitig eine einphasige Halbbrücke und lastseitig eine einphasige Vollbrücke aufweist. Ferner sind die Halbbrücke und die Vollbrücke gleichspannungsseitig sowie parallel hierzu ein Zwischenkreiskondensator geschaltet. Die angegebene Stromrichterschaltung umfasst in jedem Submodul eine angegebene Steuervorrichtung.

Die oben beschriebenen Eigenschaften, Merkmale und Vorteile dieser Erfindung sowie die Art und Weise, wie diese erreicht werden, werden im Zusammenhang mit der folgenden Beschreibung der Ausführungsbeispiele anhand einer Zeichnung näher erläutert werden. Darin zeigen:
- FIG 1: eine Schaltung mit einem modularen Umrichter und
- FIG 2: ein Submodul des modularen Umrichters.

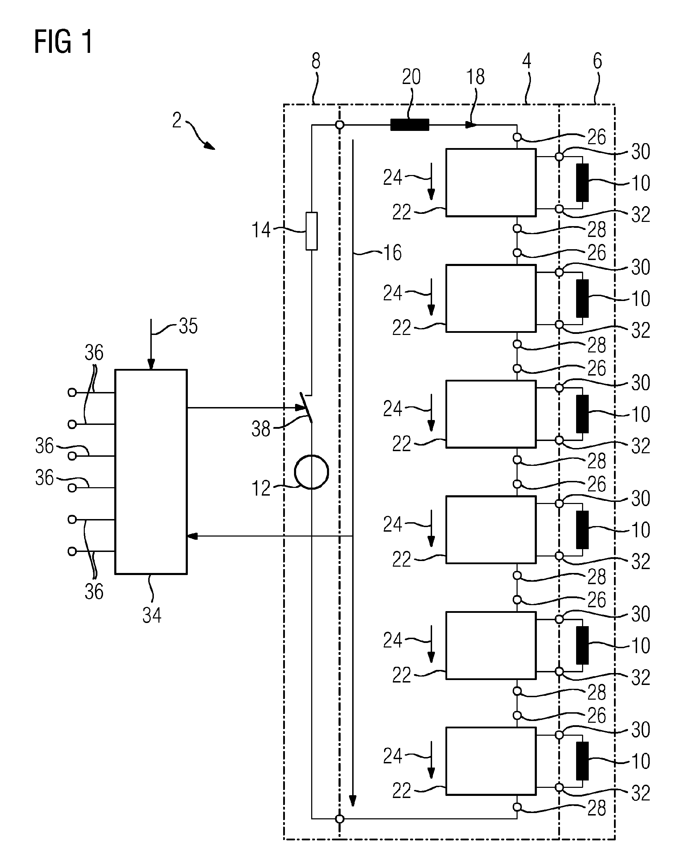

Es wird auf FIG 1 Bezug genommen, die eine Schaltung 2 mit einer beispielhaften Stromrichterschaltung 4 zeigt. Die Stromrichterschaltung 4 speist einen elektrischen Verbraucher 6 mit elektrischer Leistung aus einer elektrischen Leistungsquelle 8.

Der elektrische Verbraucher 6 ist in der vorliegenden Ausführung als Elektromotor eines Fahrzeuges ausgebildet und weist sechs elektrische Lasten 10 auf, wobei jede elektrische Last 10 eine Motorwicklung des Elektromotors darstellt.

Die elektrische Leistungsquelle 8 ist in der vorliegenden Ausführung eine Batterie 8, die sich in eine Spannungsquelle 12 mit einem dazu in Reihe angeschlossenen Innenwiderstand 14 zerlegen lässt. Die Batterie 8 legt an die Stromrichterschaltung 4 eine Batteriespannung 16 an und gibt an die Stromrichterschaltung 4 einen Batteriestrom 18 ab.

Die Stromrichterschaltung 4 weist eingangsseitig eine Induktivität 20 auf, die beispielsweise eine Spule sein kann. An diese Induktivität 20 schließt sich in Reihe eine Reihenschaltung aus sechs noch zu beschreibenden Submodulen 22 an. An den einzelnen Submodulen 22 fällt jeweils eine Teilspannung 24 ab. Ferner ist an jedes Submodul 22 jeweils eine elektrische Last 10 angeschlossen. Basierend auf den Teilspannungen 24 versorgen die Submodule 22 auf diese Weise die Lasten 10 mit elektrischer Energie in einer noch zu beschreibenden Weise. Für die Anzahl der Submodule 22 und elektrischen Lasten 10 wurde in der vorliegenden Ausführung sechs gewählt. Die Stromrichterschaltung 4 kann jedoch eine beliebig hohe Anzahl an Submodulen 22 besitzen und damit eine beliebig hohe Anzahl an elektrischen Lasten 10 speisen. Je mehr Submodule 22 jedoch in der Reihenschaltung verschaltet sind, desto kleiner werden die entsprechenden Teilspannungen 24. Jedes Submodul 22 weist eine erste Eingangsklemme 26, eine zweite Eingangsklemme 28, eine erste Ausgangsklemme 30 und eine zweite Ausgangsklemme 32 auf. Während über den ersten und zweiten Eingangsklemmen 26, 28 jeweils die Teilspannungen 24 abfallen, sind an die ersten und zweiten Ausgangsklemmen 30, 32 die Lasten 10 angeschlossen.

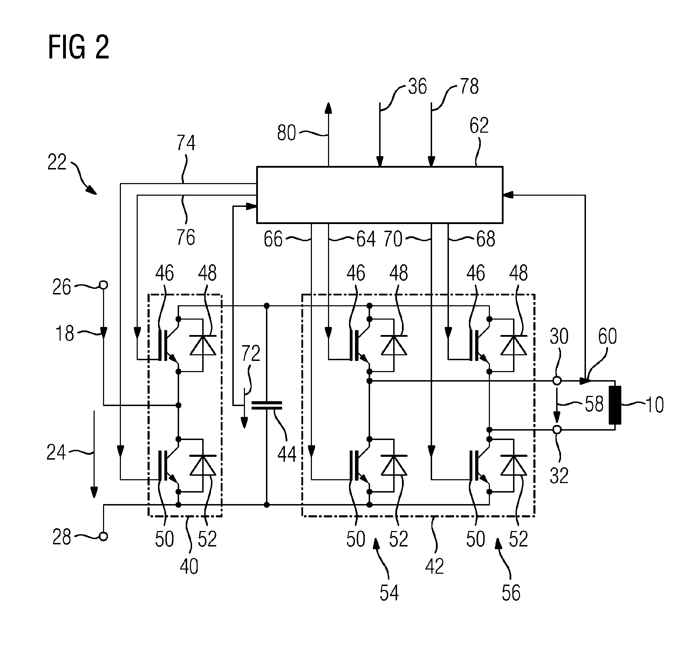

Die Schaltung 2 weist ferner ein übergeordnetes Steuergerät auf, nachstehend Master 34 genannt, das die Erzeugung des Drehfeldes mit den als Motorwicklungen ausgebildeten elektrischen Lasten 10 des als Elektromotor ausgebildeten elektrischen Verbrauchers 6 steuert. Dazu kann der Master 34 eine Drehzahl 35 des als Elektromotor ausgebildeten elektrischen Verbrauchers 6 empfangen und basierend auf Stellsignalen 36 die einzelnen Submodule 22 ansteuern. Basierend auf den Stellsignalen 36 stellen die einzelnen Submodule 22 einen in FIG 2 gezeigten elektrischen Strom 60 durch die als Motorwicklungen ausgebildeten elektrischen Lasten 10 ein, um das Drehfeld zu erzeugen.

Der Master 34 ist ferner vorgesehen, die Batteriespannung 16 zu erfassen. Anhand der Batteriespannung 16 überprüft der Master 34 die Schaltung 2 auf Fehler hin. Ist die Batteriespannung 16 beispielsweise zu gering, ist dies ein Anzeichen für einen Kurzschluss. Im Fehlerfalle überführt der Master 34 die Schaltung 2 in einen sicheren Zustand, indem er einen Schalter 38 öffnet, der beispielsweise intern in der Batterie 8 angeordnet sein kann.

Es wird auf FIG 2 Bezug genommen, die beispielhaft den Aufbau eines der Submodule 22 in der Stromrichterschaltung 4 der FIG 1 zeigt. In FIG 2 werden zu FIG 1 gleiche Elemente mit gleichen Bezugszeichen versehen und nicht noch einmal beschrieben.

Das Submodul 22 weist eine Eingangshalbbrücke 40, eine Vollbrücke 42 und einen Zwischenkreiskondensator 44 auf, die miteinander parallel verschaltet sind.

Die Eingangshalbbrücke 40 weist einen ersten Schalter 46 und eine dazu parallel geschaltete erste Freilaufdiode 48 sowie einen dazu in Reihe geschalteten zweiten Schalter 50 und eine dazu parallel geschaltete zweite Freilaufdiode 52 auf. Die Schalter können als Leistungshalbleiterschalter, wie beispielsweise MOSFETs (Metalloxid-Feldeffekttransistor) ausgebildet sein. Abhängig von der Art des Leistungshalbleiterschalters können die Freilaufdioden 48, 52 auch weggelassen werden.

Die erste Teilspannung 24 ist an den zweiten Schalter 50 angelegt, während der erste Schalter 46 in Reihe zwischen dem zweiten Schalter 50 und dem Wechselrichter 42 geschaltet ist. Somit kann der zweite Schalter 50 aus Sicht der Vollbrücke 42 den Eingang aus der Batterie 8 kurzschließen, während der erste Schalter 46 (bei geöffneten zweiten Schalter 50) die Vollbrücke 42 in den Strompfad der Batterie 8 legen kann. Werden in jedem Submodul 22 die Schalter 46, 50 in gleicher Weise abwechselnd geöffnet und geschlossen, ist gemeinsam mit der Induktivität 20 ein Hochsetzsteller geschaffen, der die Summe der Teilspannungen 24 höher setzt, als die Batteriespannung 16. Weiterhin kann durch die Eingangshalbbrücke 40 die Vollbrücke 42 auch dauerhaft aus der Reihenschaltung der drei Submodule 22 entfernt werden, wenn der zweite Schalter 50 dauerhaft geschlossen bleibt.

Die Vollbrücke 42 realisiert einen Vierquadrantensteller, der eine erste Wechselrichterhalbbrücke 54 und eine zweite Wechselrichterhalbbrücke 56 aufweist. Beide Wechselrichterhalbbrücken 54, 56 sind analog zur Eingangshalbbrücke 40 aufgebaut. Die hochgesetzte Teilspannung 24, die über den Zwischenkreiskondensator 44 geglättet wird, kann durch eine geeignete Ansteuerung der Vollbrücke 42 in eine Wechselspannung 58 umgewandelt werden. Die Wechselspannung 58 wird an die elektrische Last 10 angelegt und ruft einen entsprechenden Wechselstrom 60 durch die elektrische Last 10 hervor. Gibt die elektrische Last 10 elektrische Energie an die als Vierquadrantensteller ausgeführte Vollbrücke 42 ab, so kann diese den entsprechenden Leistungsfluss zurück in das Submodul 22 leiten.

Zur Ansteuerung der Vollbrücke 42 ist im Submodul 22 ein lokales Steuergerät, nachstehend Slave 62 genannt, vorgesehen. Der Slave 62 empfängt vom Master 34 über eine nicht gezeigte sichere elektrische Trennung das Stellsignal 36. Basierend auf dem Stellsignal 36 leitet der Slave 62 ein erstes Ansteuersignal 64 für den ersten Schalter 46 der ersten Wechselrichterhalbbrücke 54, ein zweites Ansteuersignal 66 für den zweiten Schalter 50 der ersten Wechselrichterhalbbrücke 54, ein drittes Ansteuersignal 68 für den ersten Schalter 46 der zweiten Wechselrichterhalbbrücke 56 und ein viertes Ansteuersignal 70 für den zweiten Schalter 50 der zweiten Wechselrichterhalbbrücke 56 ab, so dass die Wechselrichterhalbbrücken 54, 56 den Batteriestrom 18 zerhacken und als Wechselstrom 60 durch die elektrische Last 10 so einstellen, das er bestimmten Vorgaben folgt, die dem Slave im Stellsignal 36 mitgeteilt werden. Die Erzeugung der Ansteuersignale 64 bis 70 kann dabei durch eine offene Steuerung oder basierend auf einer Messung des Wechselstromes 60 durch eine geschlossene Regelung erfolgen.

Der Slave 62 kann ferner anhand einer am Zwischenkreiskondensator 44 abfallenden Spannung 72 einen Fehler im Submodul 22 erfassen. Der Zwischenkreiskondensator 44 ist zur Zwischenspeicherung von elektrischer Energie aus der elektrischen Last 10 aufgrund eines Blindleistungsflusses vorgesehen, die das Submodul 22 aufgrund der vorgegebenen Richtung des Batteriestromes 18 und der Batteriespannung 16 nicht verlassen kann. Der Blindleistungsfluss ist jedoch begrenzt, so dass auch die Zwischenkreiskondensatorspannung 72 begrenzt ist. Überschreitet diese einen bestimmten Wert, so ist dies demnach ein Hinweis auf einen fehlerhaften elektrischen Energiefluss durch das Submodul 22, da der Zwischenkreiskondensator 44 nun nicht mehr ausschließlich elektrische Energie aus dem Blindleistungsfluss sondern auch aus einem Wirkleistungsfluss speichert, was darauf hindeutet, dass eventuell eine Unterbrechung im Submodul vorliegen könnte. Unterschreitet die Zwischenkreiskondensatorspannung 72 hingegen einen weiteren kleineren vorbestimmten Wert, so ist dies ein Hinweis auf einen Kurzschluss zum Zwischenkreiskondensator 44. In beiden Fällen kann der Slave 44 mit einem fünften Ansteuersignal 74 den zweiten Schalter 50 dauerhaft schließen, so den Eingang der Eingangshalbbrücke 40 kurzschließen und das Submodul 22 so aus dem Leistungskreis der Stromrichterschaltung 4 entfernen, ohne, dass die restlichen Submodule 22 davon betroffen wären.

Alternativ oder zusätzlich kann der Kurschluss auch über den ersten Schalter 46 der Eingangshalbbrücke 40 und einer der beiden Wechselrichterhalbbrücken 54, 56 erreicht werden, wobei der erste Schalter 46 vom Slave durch ein sechstes Ansteuersignal 76 angesteuert wird. Dieser alternative Kurzschluss sollte jedoch erst geschalten werden, nachdem der Zwischenkreiskondensator 44 wie nachstehend erläutert entladen wurde.

Zum Entladen des Zwischenkreiskondensators 44 legt der Slave 62 die Zwischenkreiskondensatorspannung 72 mittelbar oder unmittelbar an die elektrische Last 10 an. Durch unmittelbares Anlegen der Zwischenkreiskondensatorspannung 72 an die elektrische Last 10 wird der Zwischenkreiskondensator 44 sofort entladen, da die als Motorwicklung ausgeführte elektrische Last 10 für die Gleichspannung 72 des Zwischenkreiskondensators 44 wie ein Kurzschluss wirkt.

Um zu hohe Stromspitzen zu vermeiden, kann die Zwischenkreiskondensatorspannung 72 aber auch durch die Vollbrücke 42 pulsweitenmoduliert werden. Dazu kann der Slave 62 beispielsweise vom Master 34 einen Stromsollwert 78 empfangen. Aus dem Stromsollwert 78 wird intern im Slave 62 ein Referenzsignal und ein Taktsignal erzeugt. Basierend darauf werden die Schalter 46, 50 der Wechselrichterhalbbrücken 54, 56 über die Ansteuersignale 64 bis 70 per Pulsweitenmodulation angesteuert, was zu einem Laststrom 60 führt, der den Stromsollwert 78 nicht überschreitet.

Alternativ zur Pulsweitenmodulation kann der Strom 60 durch die elektrische Last 10 auch geregelt werden, indem dieser immer dann durch den Wechselrichter ausgeschaltet wird, wenn er einen bestimmten Wert überschreitet und wieder eingeschaltet wird, wenn er einen zweiten, kleineren Wert unterschreitet. Diese Form der Stromregelung wird auch als Zweipunktregelung mit Hysterese bezeichnet und ist besonders preisgünstig technisch umsetzbar.

Der Slave 62 kann das Auftreten des Fehlers im Submodul 22 über eine Nachricht 80 an den Master 34 melden, damit dieser gegebenenfalls weitere Schutzmaßnahmen einleiten kann. Ist der als Elektromotor ausgeführte elektrische Verbraucher 6 beispielsweise zum Antrieb eines Fahrzeugs vorgesehen, so kann der Master 34 im Falle eines Fehlers in einem Submodul 22 und dem damit verbundenen Ausfall einer als Motorwicklung ausgeführten Last 10 basierend auf der Nachricht 80 den Fahrzeugbetrieb in einem Notprogramm fortsetzen. Dabei wird das Fahrzeug mit einer vergleichsweise geringen Höchstgeschwindigkeit bis zur nächsten Werkstatt fortbewegt, so dass die verbleibenden als Motorwicklung ausgeführten Lasten 10 nicht ebenfalls aufgrund einer Überbelastung ausfallen.

Obwohl die Erfindung im Detail durch die bevorzugten Ausführungsbeispiele näher illustriert und beschrieben wurde, ist die Erfindung nicht durch diese Ausführungsbeispiele eingeschränkt. Andere Variationen können vom Fachmann hieraus abgeleitet werden, ohne den Schutzumfang der Erfindung zu verlassen.

## Patentansprüche

1. Verfahren zum Entladen eines Zwischenkreiskondensators (44) eines bestimmten Submoduls (22) einer Stromrichterschaltung (4) umfassend wenigstens zwei Submodule (22) in Reihenschaltung, die über eine Induktivität elektrische Leistung aus einer eine Gleichspannung (16) abgebenden Leistungsquelle (8) bezieht aufweist, wobei jedes Submodul (22) eingangsseitig eine einphasige Halbbrücke (40) und lastseitig eine einphasige Vollbrücke (42) aufweist, und wobei die Halbbrücke (40) und die Vollbrücke (42) gleichspannungsseitig sowie parallel hierzu ein Zwischenkreiskondensator (44) geschaltet sind,
**gekennzeichnet durch** die Schritte:
- Übertragen einer im Zwischenkreiskondensator (44) des bestimmten Submoduls (22) gespeicherten elektrischen Energie an einen Ausgang (30, 32) der Vollbrücke (42) des bestimmten Submoduls (22), und
- Abgeben der übertragenen elektrischen Energie an eine an die Vollbrücke (42) des bestimmten Submoduls (22) angeschlossene elektrische Last (10), bis eine Spannung (72) am Zwischenkreiskondensator (44) des bestimmten Submoduls (22) auf eine vorbestimmte Schwellspannung reduziert ist.

2. Verfahren nach Anspruch 1, **gekennzeichnet durch** die Schritte:
- Erfassen einer Fehlfunktion in der Stromrichterschaltung (4) und
- Abschalten der die Gleichspannung (16) abgebenden Leistungsquelle (8) nachdem die Fehlfunktion in der Stromrichterschaltung (4) erfasst ist.

3. Verfahren nach Anspruch 2, **gekennzeichnet durch** ein
- Erfassen der Fehlfunktion in der Stromrichterschaltung (4), wenn ein Gehäuse der Submodule (22) und/oder ein Gehäuse der Stromrichterschaltung (4) geöffnet ist.

4. Verfahren nach einem der vorstehenden Ansprüche, **gekennzeichnet durch** die Schritte:
- Erfassen einer Fehlfunktion im bestimmten Submodul (22),
und
- Abschalten einer Eingangsspannung (24) am bestimmten Submodul (22), nachdem die Fehlfunktion im bestimmten Submodul (22) erfasst ist.

5. Verfahren nach Anspruch 4, **gekennzeichnet durch** ein
- Erfassen der Fehlfunktion im bestimmten Submodul (22), wenn die Spannung (72) am Zwischenkreiskondensator (44) des bestimmten Submoduls (22) von einem vorgegebenen Spannungsbereich abweicht.

6. Verfahren nach einem Ansprüche 3 bis 5, **gekennzeichnet durch** ein
- Kurzschließen eines Eingangs (26,28) des bestimmten Submoduls (22) der Stromrichterschaltung (4) zum Abschalten der Eingangsspannung (24) des bestimmten Submoduls (22).

7. Verfahren nach einem der vorstehenden Ansprüche, **gekennzeichnet durch** ein
- Modulieren eines **durch** die elektrische Last (10), die an das bestimmte Submodul (22) angeschlossen ist, fliesenden Ausgangsstromes (60) mit der Vollbrücke (42) des bestimmten Submoduls (22) zum Übertragen der am Zwischenkreiskondensator (44) des bestimmten Submoduls (22) anliegenden Spannung (72) an den Ausgang (30,32) der Vollbrücke (42) des bestimmten Submoduls (22).

8. Verfahren nach Anspruch 7, **dadurch gekennzeichnet, dass** die Modulation eine Pulsweitenmodulation oder eine Pulsfrequenzmodulation ist.

9. Verfahren nach Anspruch 8, **gekennzeichnet durch** ein
- Bestimmen eines Referenzsignals und/oder eines Pulssignals für die Pulsweitenmodulation aus einem Regelkreis zum Regeln des Ausgangstromes (60) **durch** die elektrische Last (10), die an das bestimmte Submodul (22) angeschlossen ist.

10. Verfahren nach einem der Ansprüche 7 bis 9, **gekennzeichnet durch** ein
- Modulieren des **durch** die elektrische Last (10), die an das bestimmte Submodul (22) angeschlossen ist, fliesenden Ausgangsstromes (60) derart, dass sich **durch** den Ausgangsstrom (60) hervorgerufene Wirkungen der einzelnen an die Submodule (22) angeschlossenen elektrischen Lasten (10) gegenseitig aufheben.

11. Verfahren nach Anspruch 10, **dadurch gekennzeichnet, dass** die elektrischen Lasten (10) jeweils Wicklungen eines Elektromotors sind, die als durch den Ausgangsstrom (60) hervorgerufene Wirkung ein Drehmoment auf einen Rotor des Elektromotors ausüben.

12. Verfahren nach einem der vorstehenden Ansprüche, **gekennzeichnet durch** ein
- Regeln eines **durch** die elektrische Last (10), die an das bestimmte Submodul (22) angeschlossen ist, fliesenden Ausgangsstromes (60) mit der Vollbrücke (42) des bestimmten Submoduls (22) auf einen Sollwert (76) zum Übertragen der am Zwischenkreiskondensator (44) des bestimmten Submoduls (22) anliegenden Spannung (72) an den Ausgang (30,32) der Vollbrücke (42) des bestimmten Submoduls (22).

13. Verfahren nach Anspruch 12, wobei die Regelung eine Zweipunktregelung mit eingebauter Hysterese umfasst.

14. Steuervorrichtung (62) zur Durchführung eines Verfahrens nach einem der vorstehenden Ansprüche.

15. Stromrichterschaltung (4), umfassend wenigstens zwei Submodule (22) in Reihenschaltung, die über eine Induktivität elektrische Leistung aus einer eine Gleichspannung abgebenden Leistungsquelle (8) bezieht,
- wobei jedes Submodul (22) eingangsseitig eine einphasige Halbbrücke (40) und lastseitig eine einphasige Vollbrücke (42) aufweist, und
- wobei die Halbbrücke (40) und die Vollbrücke (42) gleichspannungsseitig sowie parallel hierzu ein Zwischenkreiskondensator (44) geschaltet sind,
**gekennzeichnet durch**
- eine Steuervorrichtung nach Anspruch 14 in jedem Submodul (22).
